# EUROPEAN PATENT APPLICATION

(11) **EP 4 343 654 A1**
(43) Date of publication of application: **27.03.2024**
(21) Application number: 22306402.3
(22) Date of filing: 22.09.2022
(51) Int. Cl.: G06Q 20/10, G06Q 20/40

(54) **METHOD AND SYSTEM FOR PROCESSING A REQUEST FOR PAYMENT AMONG ONE OR MORE PAYERS**

(71) Applicant: Vocalink International Limited, London EC4R 3AB (GB)
(72) Inventor: BATISTA INOA, Genices, New York 10036 (US); BLANCO GUTIERREZ, German, 78100 Saint Germain en Laye (FR); RAYMENT, Emma, Hemel Hempstead HP1 1TZ (GB)
(74) Representative: Murgitroyd & Company

(57) **Abstract**

A method for processing a request for payment (RFP) among one or more payers, wherein the RFP is associated with an outstanding bill, said RFP being issued by a Biller (20), said method comprising:
sending (120), by a Biller (20) or a Biller service provider (25), the RFP to a Bill Pay platform (10);
forwarding (130), by the Bill Pay platform (10), the RFP to a first Payer (A);
receiving (140), by the first Payer (A), the RFP;
sending (150), by the first Payer (A), a request to the Bill Pay Platform (10) to forward the RFP to a second Payer (B) for full or partial payment;
receiving (160), by the Bill Pay platform (10), the first request to forward the RFP to the second Payer (B)); and
forwarding (170), by the Bill Pay platform (10), the RFP to the second Payer (B).

## Description

### Field of the invention

The present disclosure relates to a method and a system for processing a request for payment associated with a bill, for example. More specifically, the method according to the present disclosure enables a first payer, who is the recipient of the request for payment, to forward said request for payment to a second payer for full or partial payment of said bill.

### Background of the invention

In general, the issuer of a bill forwards said bill to a single recipient. However, the recipient may like to share the payment of the bill with one or more persons. For example, an energy supplier providing an apartment or a house with electricity sends an electricity bill only to one person, although the cost of said electricity bill is shared by flatmates or family members in practice.

Shared costs for the payment of a bill is a well-known practice across a number of services, like, for instance, utilities, telephone services and Internet related services.

Currently, there is no efficient user-friendly solution to allow the recipient of a bill to forward said bill to other persons for sharing payment of the bill with said other persons. Therefore, nowadays, the recipient of a bill has to contact the other persons who also have to pay the bill and make sure that each of them effectively paid her/his share of the bill.

In practice, this means that the recipient of the bill has to collect individual payments from each other person. However, this is a burdensome task for the recipient of the bill.

In addition, as the recipient of the bill is the sole contact person for the issuer of the bill, this means that the recipient of the bill has to take responsibility for payment of the bill in full, although the other persons are also responsible for said payment. This situation may lead to critical situations for the recipient of the bill if the bill is not paid, for instance.

In addition, in the event one or more payments have not been made by one or more of the other persons, the recipient of the bill has to remind the one or more related persons that her/his payment related to her/his share of the bill is overdue. This is a cumbersome task for the recipient of the bill.

Furthermore, the payment of bills such as utility bills has to be processed by the recipient of the bill before a specified deadline determined by the related utility. If the bill is not paid in time, the utility who issued a bill interrupts the provisioning of services. In practice, this means that the recipient of the bill has to pay the bill before expiry of the deadline to avoid interruption of the provisioning of services, even if said recipient of the bill has not received payments from the other persons regarding their shares of the bill. This situation may lead to other critical situations for the recipient of the bill if said recipient does not pay the bill in due time.

Therefore, nowadays, processing and managing the payment of a bill to be shared amongst a plurality of persons is a burdensome and time-consuming task.

Therefore, it is desirable to provide a method and system to overcome at least the above drawbacks of the prior art methods and systems.

### Objects of the invention

Objects and aspects of the present disclosure seek to provide a streamlined process to allow receivers of outstanding bills to forward said bills and/or split the payment of bills with one or more payers.

### Summary of the invention

A first aspect of the present disclosure relates to a method for processing a request for payment (RFP) among one or more payers, wherein the RFP is associated with an outstanding bill, said RFP being issued by a Biller, said method comprising:
sending, by a Biller or a Biller service provider, the RFP to a Bill Pay platform;
forwarding, by the Bill Pay platform, the RFP to a first Payer; receiving, by the first Payer, the RFP;
sending, by the first Payer, a request to the Bill Pay Platform to forward the RFP to a second Payer for full or partial payment;
receiving, by the Bill Pay platform, the first request to forward the RFP to the second Payer; and
forwarding, by the Bill Pay platform, the RFP to the second Payer.

According to a preferred embodiment, the step of forwarding, by the Bill Pay platform, the RFP to the first Payer comprises forwarding, by the Bill Pay platform, the RFP to a first Payer Institution associated with the first Payer; receiving, by the first Payer Institution, the RFP; and forwarding, by the first Payer Institution, the RFP to the first Payer.

According to a preferred embodiment, the step of forwarding, by the Bill Pay platform, the RFP to the second Payer, comprises forwarding, by the Bill Pay platform, the RFP to a second Payer Institution associated with the second Payer; receiving, by the second Payer Institution, the RFP; and forwarding, by the second Payer Institution, the RFP to the second Payer.

According to a preferred embodiment, the step of sending, by the first Payer, a request to the Bill Pay Platform to forward the RFP to a second Payer comprises: sending, by the first Payer, a request to the first Payer Institution to forward the RFP to the second Payer; receiving, by the first Payer Institution, the request to forward the RFP; and forwarding, by the first Payer Institution, the request to the Bill Pay platform to forward the RFP.

According to a preferred embodiment, after receipt by the first Payer Institution, of the request to forward the RFP, the method comprises checking, by the first Payer Institution, whether the RFP has previously been forwarded, and, where the RFP has not previously been forwarded: sending, by the first Payer Institution, the request to the Bill Pay platform to forward the RFP.

According to a preferred embodiment, the step of sending, by the first Payer, a request to forward the RFP to a second Paye comprises sending, by the first Payer, together with the request to forward the RFP, proxy data of the second Payer.

According to a preferred embodiment, the method further comprises receiving, by the Bill Pay platform, the request to forward the RFP together with the proxy data of the second Payer; using the proxy data of the second Payer to retrieve corresponding identification data of the second Payer in a Payer Alias Directory, and forwarding, by the Bill Pay platform the RFP to the second Payer using the retrieved identification data of the second Payer.

According to a preferred embodiment, the method further comprises sending, by the second Payer, to a second Payer Institution associated with the second Payer, a validation message regarding the intention of the second Payer to pay the RFP; receiving, by the second Payer Institution, the validation message; and forwarding, by the second Payer Institution the validation message to the Bill Pay platform.

According to a preferred embodiment, the method further comprises carrying out, by the second Payer Institution, the payment towards the outstanding bill associated with the RFP; sending, by the second Payer Institution, a payment confirmation message regarding the completed payment of the outstanding bill by the second Payer; receiving, by the Bill Pay platform, the payment confirmation message; and sending, by the Bill Pay platform, the payment confirmation message to the first Payer.

According to a preferred embodiment, the method further comprises forwarding, by the Bill Pay platform, the payment confirmation message to the Biller service provider.

According to a preferred embodiment, the method further comprises receiving, by the Biller service provider, the payment confirmation message; generating, by the Biller service provider, a Bill Reference Number (BRN) relating to the payment of the outstanding bill by the second Payer; and forwarding, by the Biller service provider, the BRN to the Bill Payment platform.

According to a preferred embodiment, the step of receiving, by the first Payer, the RFP, comprises: receiving, by the first Payer, an RFP in a banking application installed on a personal electronic device used by the first Payer.

A second aspect of the present disclosure relates to a data processing system comprising a processor configured to perform the steps of the method according to the first aspect of the present disclosure.

A third aspect of the present disclosure relates to a computer program product comprising instructions, which, when the program is executed by a computer, cause the computer to carry out the steps of the method according to the first aspect of the present disclosure.

A fourth aspect of the present disclosure relates to a computer-readable storage medium comprising instructions which, when executed by a computer, cause the computer to carry out the method of the first aspect. The storage medium may be non-transitory.

### Brief Description of the Drawings

Reference will now be made, by way of example, to the accompanying drawings, in which:
Figure 1 is a schematic diagram of a system 100 for processing a method for forwarding a request for payment for full or partial payment, in accordance with an embodiment of the disclosure, given by way of example; and
Figure 2 is a flow chart diagram showing the steps of the method for forwarding a request for payment for full or partial payment, in accordance with an embodiment of the disclosure, given by way of example.

### Detailed Description

In the present disclosure, the terms "bill" and "request for payment (RFP)" are used.

The term "bill" refers to any type of invoice that has been generated, for example by a merchant, for the supply of a service or a product. The terms refer to an invoice in the broadest possible sense and may relate to the supply of a one-off service or good or to the supply of a periodic service or a periodic supply of products.

The term "request for payment (RFP)" refers to a request being sent by an entity in order to obtain the payment of an outstanding bill.

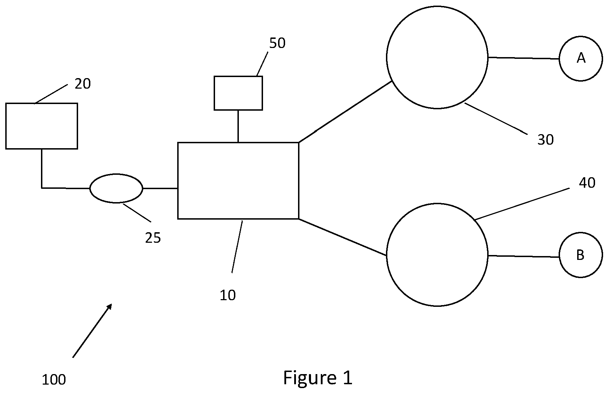

Figure 1 is a schematic representation of an infrastructure for executing a method for processing a request for payment by forwarding the request for payment for full or partial payment according to the present disclosure. The core of the infrastructure comprises a Bill Pay platform 10. The Bill Pay Platform 10 operates as an intermediary unit between billers 20 being issuers of bills and individual payers being recipient of said bills. This means that the Bill Pay platform 10 serves as a central portal through which bills can be forwarded from issuers of bills to recipients of bills.

The individual payers are linked or connected to the Bill Pay Platform 10 via the respective Payer Institutions 30, 40 of the individual payers. These Payer Institutions 30, 40 are, for instance, banks. Figure 1 shows for the purposes of convenience only a first Payer Institution 30 and second Payer Institution 40. It will be understood that the number of Payer Institutions that can connect to and use the Bill Pay platform 10 can be limitless.

The Bill Pay Platform 10 may, for instance, be the Mastercard ^{®} Bill Pay Exchange Platform also referred to the acronym BPX.

For clarity purposes, Figure 1 only shows a single issuer of a bill or Biller 20. It will be understood that the number of Billers 20 that can connect to and use the Bill Pay platform 10 can be limitless.

The Biller 20 is connected to the Bill Pay Platform 10 via their Biller service provider 25 which interfaces the Biller 20 and the Bill Pay platform 10. The Biller 20 can issue bills for individual payers and present those bills to the Bill Pay Platform 10, which manages the forwarding of the bills to the Payer Institutions 30, 40 of the individual payers.

The first Payer Institution 30 is associated with a first payer, i.e. Payer A. The second Payer Institution 40 is associated with a second payer, i.e. Payer B. It will be understood that in practise the first Payer institution 30 associated with Payer A and a second Payer Institution 40 associated with Payer B may be the same Payer Institution across Payers A and B.

According to the present disclosure, the first Payer A is a customer of the Bill Pay platform 10 via the Payer Institution 30 of said first Payer A. The second Payer B is also a customer of the Bill Pay platform 10 via the Payer Institution 40 of said second Payer B.

The first Payer A uses communication means that are provided by the Payer Institution 30 in order to communicate with said Payer Institution 30. Typically, the first Payer A may install a banking application on the personal electronic device (not shown) of said first Payer A. The personal electronic device may be a mobile device, such as a smart phone. The first Payer A may therefore use their personal electronic device to receive any type of data content from the Payer Institution 30 and send any type of data content to the Payer Institution 30.

As above described in reference to the first payer A, the second Payer B uses communication means that are provided by the Payer Institution 30 in order to communicate with said Payer Institution 40. Typically, second Payer B may install a banking application on the personal electronic device (not shown) of said second Payer B. The personal electronic device may be a mobile device, such as a smart phone. The second Payer B may therefore use their personal electronic device to receive any type of data content from the Payer Institution 40 and send any type of data content to the Payer Institution 40.

As shown in Figure 1, the Bill Pay platform 10 is connected to a Payer Alias Directory 50. The Payer Alias Directory 50 stores data for identifying the customers of the Bill Pay platform 10, such as the first payer A and the first payer B. Thus, when a payer communicates with the Bill Pay platform 10 regarding the payment of a bill, said payer simultaneously sends an alias or proxy data of said payer to the Bill Pay platform 10. Thus, the Bill Pay platform 10 can compare said alias or proxy data with the identification data stored in the Payer Alias Directory 50 in order to identify the payer.

As will be explained in more detail below, the system 100 of Figure 1 allows the Payer Institutions 30, 40 to provide to their customers the ability to pay a bill, or to forward the bill to another customer for full or partial payment. In practice, a request for payment relating to a bill is generated by a Biller 20 and sent to a customer, who is the first Payer A. The system 100 allows the customer to split the bill into a plurality of parts and allows one other, or a plurality of other payers to pay respective parts of the bill. To allow this the first Payer A can forward the request for payment to the other payers and ask for full or partial payment of the request for payment. All these processing steps for paying and forwarding a request for payment can be carried out by using of a single banking electronic application, or banking application, as a "one-stop-shop" for the payers or customers. The payers or customers using the system 100 according to the disclosure do not need to split their bills by using a plurality of different technical means.

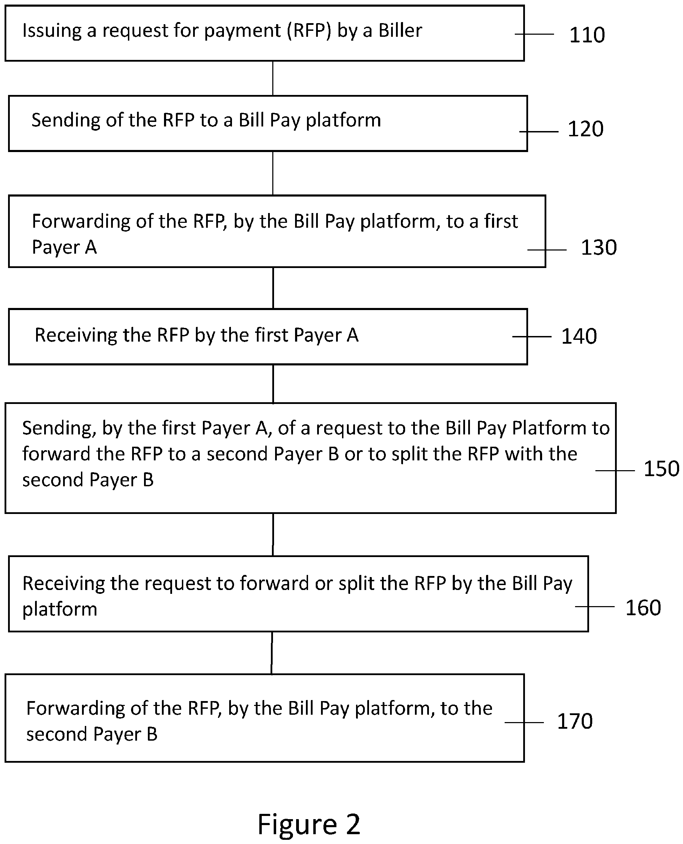

Figure 2 is a flow chart diagram showing the steps of processing a request for payment by applying the method of the present disclosure.

In a first step 110, the Biller 20 issues a request for payment (RFP).

In a second step 120, the Biller 20 sends the RFP to the Bill Pay platform 10 by using the Biller service provider 25.

In a third step 130, the Bill Pay platform 10 forwards the RFP to the first Payer A.

In a fourth step 140, the first Payer A receives the RFP.

In a fifth step 150, the first Payer A sends a request to the Bill Pay Platform 10 to forward the RFP to the second Payer B for full or partial payment.

In a sixth step 160, the Bill Pay platform 10 receives the request to forward the RFP.

In a seventh step 170, the Bill Pay platform 10 forwards the RFP to the second Payer B.

The step 130 comprises a step of forwarding, by the Bill Pay platform 10, the RFP to a Payer Institution 30 associated with the first Payer A, a further step of receiving, by said Payer Institution 30 associated with the first Payer A, the RFP, and a further step of forwarding, by said Payer Institution 30, the RFP to the first Payer A.

The step 170 comprises a step of forwarding, by the Bill Pay platform 10, the RFP to a Payer Institution 40 associated with the second Payer B, a further step of receiving, by the Payer Institution 40 associated with the second Payer B, the RFP, and a further step of forwarding, by the Payer Institution 40, the RFP to the second Payer B.

As explained with reference to Figure 1, the first Payer A and the second Payer B are connected to the Bill Pay platform 10 via their respective Payer Institutions 30, 40. This means that first Payer A is a client of the Payer Institution 30. First Payer A can therefore benefit from the services provided by the Payer Institution 30. In a similar way, the second Payer B is a client of the Payer Institution 40. The second Payer B can therefore benefit from the services provided by the Payer Institution 40.

In practice, the method of the present disclosure operates as follows: a Biller 20 or a Biller Service Provider 25, who operates on behalf of the Biller 20, generates a Request For Payment (RFP) comprising or associated with a bill, for instance. The generated RFP is in the name of the first Payer A, which means that the first Payer A is considered by the Biller as being the sole payer for the generated RFP. The Biller 20 then forwards the RFP to the Bill Pay platform 10 or forwards the RFP via the Biller service provider 25 in order to let the Bill Pay platform 10 send the RFP to the first Payer A. The Bill Pay platform 10 forwards the RFP to the Payer Institution 30 associated with the first Payer A. The Payer Institution 30 then forwards the RFP to the first Payer A. Typically, the Payer Institution 30 uses a banking application, which is installed on a mobile device used by the first Payer A.

The first Payer A receives the RFP and a notification indicating that a RFP in the name of the first Payer A has been received at the Payer Institution 30 and inviting said first Payer A to manage the payment of the RFP. The method of the present disclosure allows the first Payer A to either forward the RFP for full payment to a second Payer B or to request that the second Payer B pays part of the RFP. On receipt of the notification and the RFP, the first Payer A reviews the content of the RFP and chooses to either pay the bill or request that the RFP be forwarded for full or partial payment.

Where the first Payer A decides to request that the RFP be forwarded for full or partial payment, the first Payer A selects a second Payer B and any of the following actions is executed:
i) the first Payer A requests the Payer Institution 30 to forward the RFP to the selected second Payer B for paying the whole amount of the bill,
ii) the first Payer A requests the Payer Institution 30 to split the RFP by allocating a specific amount or part of the bill to the selected second Payer B for payment of said specific amount or part of the bill.

For the selection of second Payer B by Payer A, the Payer Alias Directory is involved. Payer A enters the proxy of Payer B and that proxy in the request will later be sent by the Bill Pay Platform to the directory for validation.

To ensure that the RFP is forwarded to the right person, it is possible that the name of the second Payer B is shown to the first Payer A, before the first Payer A confirms the forwarding of the RFP. Once the first Payer A has sent his request to forward or split the RFP, a confirmation message is displayed in the banking application of the first Payer A. The confirmation message comprises information confirming that the request to forward or split the RFP has been sent to the selected second Payer B. The confirmation message also indicates the name of the second Payer B and an identification information of the second Payer B, such as the mobile telephone number of the second Payer B. The confirmation message may further comprise the amount or part of the bill to be paid by the second Payer B, the due date for the payment and details related to the request to forward or split the RFP, such as the date and time of the sending of the request by the first Payer A.

The fact that the name of the second Payer B, or the names of multiple Payers to whom the RFP was forwarded, is shown in the confirmation is useful, for instance, to allow the first Payer A to monitor who has responded to the FRP and who has not.

The request to forward the RFP to the second Payer B or split the RFP with said second Payer B is sent by the first Payer A to their Payer Institution 30. Therefore, there is no need for the first Payer A to contact directly the second Payer B through additional communication means such as phone or email for example.

In addition, the Payer Institution 30 of the first Payer A sends the request to forward the RFP to the second Payer B for full or partial payment to the Bill Pay platform 10, which manages the forwarding of said request to the second Payer B. Therefore, there is no need for the Payer Institution 30 of the first Payer A to contact directly the second Payer B.

The first Payer A sends the request to forward the RFP to the Bill Pay platform 10 via the Payer Institution 30, by indicating the alias or proxy data of the second Payer B. On receipt of the request to forward the RFP, the Bill Pay platform 10 uses the proxy address to retrieve the corresponding identification data of the second Payer B in the Payer Alias Directory 50 in order to identify said second Payer B and the related Payer Institution 40 being associated with said second Payer B. Once the second Payer B is identified, the Bill Pay platform 10 forwards the request to forward the RFP to the Payer Institution 40.

Once the request to forward the RFP has been sent to the Payer Institution, the Bill Pay platform 10 keeps the Payer Institution 30 of the first Payer A informed of the progress of the process to request the forwarding of the RFP. For instance, the first Payer A receives a confirmation message once the payment of the bill related to the RFP that has been forwarded to the second Payer B has been completed. Such confirmation message may comprise the name of the second Payer B who has completed the RFP. Such confirmation message may further comprise information in relation to the amount that has been paid and further details of the payment, such as the date of the payment.

In the banking application, the first Payer A may be able to monitor the process of payment of the bill related to the RFP. Details of the RFP may be shown in the banking application, as well as the full or partial payments that have been made against the bill. The first Payer A can therefore check whether the bill has been completely paid, or partially paid, or whether the bill remains to be paid in full.

The Payer Institution 40 associated with the second Payer B receives and forwards the RFP to the second Payer B.

The Payer Institution 40 typically uses a banking application to communicate with the second Payer B, said banking application being installed on the personal mobile device used by the second Payer B. On receipt of the RFP, the second Payer B can validate the payment of the bill associated with the RFP and allow the Payer institution 40 to proceed, or, alternatively, the second Payer B can refuse the payment of the bill.

On receipt of the RFP, the second Payer B opens his banking application to review the details of the RFP. The details of the RFP may comprise an indication of the initial issuer of the bill, i.e. the Biller 20. The details of the payment request may further comprise further details of the initial bill, such as the date the initial bill was issued and the date or time period to which the bill relates. The details of the payment request may further comprise the amount or requested amount to be paid by the second Payer B and the due date by which the payment should be completed. The details of the RFP may further comprise details of the requestor, i.e. the first Payer A, such as the name of the first Payer A and optionally the contact details of first Payer A, such as a mobile telephone number. The details of the RFP may further comprise a message created by the first Payer A and intended to the first Payer B to accompany the request from the first Payer A to forward the RFP.

Where the second Payer B intends to pay the requested amount of the bill associated with the RFP, the second Payer B uses the banking application to select an account to pay the amount. The banking application can display a single account or a series of accounts to allow the second Payer B to choose the account he would like to use for the payment. The banking application can display the available balance for each of the accounts to allow the second Payer B to ascertain for each of the accounts whether there are sufficient funds to make the intended payment.

Once the second Payer B has selected the account to be debited for the payment, the banking application may display a final summary of the payment to be made. This allows the second Payer B to review the details of the intended payment prior to validating or confirming the payment of the requested amount.

When the order for payment of the requested amount has been validated by the second Payer B, the second Payer B may receive a confirmation message sent by the Payer Institution 40 on his banking application to confirm that the payment of the requested amount has been carried out by the Payer Institution 40 and that the processing of the RFP has been completed.

When validating the payment of the bill associated with the RFP, a validation message is sent by the second Payer B to the Payer Institution 40 of the second Payer B, said Payer Institution 30 forwarding thereafter the validation message to the Bill Pay platform 10.

In a similar manner, when refusing the RFP, a refusal message is sent by the second Player B to the Payer Institution 40 of the second Payer B, said Payer Institution 40 forwarding thereafter the refusal message to the Bill Pay platform 10.

In turn, the Bill Pay platform 10 informs the Biller 20 of any payment that has been confirmed and also informs the Payer Institution 30 of the first Payer A of the progress of payment of the RFP by the second Payer B.

Where the Biller 20 receives confirmation of the payment of the RFP by the second Payer B, the Biller 20 generates a Bill Reference Number (BRN) relating to the payment of the RFP by the second Payer B. The BRN relating to payment of the RFP by the second Payer B is forwarded to the Bill Payment platform 10, which manages the forwarding of the BRN to the Payer Institution 40 of the second Payer B.

The method is particularly useful in any scenario in which a merchant sends a bill to a single recipient for a product or service, while payment of the bill is shared by a plurality of persons.

Typical examples of the bills to which reference is made in the description are bills that relate to services and products that are delivered recurrently, such as utilities, telephone services and Internet related services.

The bill forwarding or payment splitting method according to the description allows users that are registered with their Payer Institutions, or customer of financial institutions, to use a seamless process to manage the payment of the bills to be shared among a plurality of persons.

The method according to the disclosure allows the handling and processing of bills by a plurality of payers who may use different Payer Institutions. According to the disclosure, irrespective of the fact that the first Payer A is a customer of Payer Institution 30 and the second Payer B is a customer of Payer Institution 40, a bill can be easily forwarded in either direction, subject to both the first Payer A and the second Payer B having access to the Bill Pay platform 10 services via their respective Payer Institution 30, 40. This simplified way of communication is based on the fact that each Payer Institution 30, 40 independently communicates with the Bill Pay platform 10 when sending and receiving payment confirmation messages and confirmation messages. Even if the first Payer A pays with his credit card at the Payer Institution 30 and the second Payer B pays with his debit account at Payer Institution 40, the Bill Pay platform 10 is able to seamlessly facilitate the consolidation of the payment data details needed by the Biller 20.

### Examples

The bill forwarding or payment splitting method can be executed, for instance, by using the Mastercard ^{®} Bill Pay Exchange (BPX) platform.

### Example 1

In the present first example, the first Payer A forwards the RFP for full payment of the related bill to the second Payer B.

In the first example, the first Payer A receives a request for payment (RFP), comprising or associated with a bill, through the Bill Pay platform 10, said first Payer A being a customer of the Bill Pay platform 10. The method of the present disclosure allows the first Payer A to forward the RFP to the second Payer B, who is another customer of the Bill Pay platform 10, for full payment of the bill by the second Payer B.

In the present first example, it is assumed that the RFP can be sent to any customer or payer being identified in the system 100 of the present disclosure. However, where a customer has set up to an autopay option, the customer does not have the ability to forward the bill since the bill will be automatically paid on his behalf.

It is further assumed that the first Payer A can only forward the bill to one other payer, i.e. the second Payer B, who does not have the option to forward the bill to yet another payer, i.e. a Payer C, for example.

Further, it is assumed that the second Payer B has the option either to pay the bill or to reject or refuse the bill. Where the second Payer B rejects the bill, the first Payer A is informed of such rejection. On receipt of the rejection notification, first Payer A can amend the forward request of the RFP by replacing the amount previously allocated to the second Payer B with an amended amount and the Bill Pay Platform can resend the RFP to the second Payer B. Alternatively, the first Payer A can make the payment of the total amount of the bill themself.

Further, it is assumed that both first Payer A and second Payer B have alias or proxy data registered with their respective Payer Institutions 30, 40 and stored on a Payer Alias Directory 50, which is reachable by the Bill Pay Platform 10.

A Biller 20, for instance a utility company, issues a bill for a service, said bill mentioning the first Payer A as the payer. The Biller 20 sends an RFP to the Biller service provider 25. The Biller service provider 25 forwards the RFP to the Bill Pay platform 10. The Bill Pay platform 10 forwards the RFP to the Payer Institution 30 of the first Payer A. The Payer Institution 30 of the first Payer A then presents the RFP to the first Payer A. The First Payer A receives, for example, a notification message informing him of the receipt of said RFP, as explained above with reference to Figure 1.

According to the present example, the first Payer A can opt to forward the RFP to another payer of their choice. In the present first example, the first Payer A forwards the RFP for full payment of the related bill to the second Payer B.

As a result, the Payer Institution 30 of the first Payer A receives a request from the first Payer A to forward the RFP to the second Payer B. To allow the Payer Institution 30 to process this request, the first Payer A must provide the Payer Institution 30 with the alias or proxy data of the second Payer B.

The proxy data of the second Payer B is, for instance, the mobile telephone number or the email address of the second Payer B being associated with the Bill Pay platform 10.

To execute the request to forward the RFP to the second Payer B, the Payer Institution 30 of the first Payer A first performs a check to determine whether the RFP has previously been forwarded to the second Payer B. To do this, the Payer Institution 30 of the first Payer A verifies in their own records, that means outside the scope of the Bill Pay platform 10, whether the same RFP has an existing forward request against it.

Where the Payer Institution 30 of the first Payer A determines that the RFP has not previously been forwarded, the Payer Institution 30 of the first Payer A transmits the request to forward the RFP together with the proxy data of the second Payer B to the Bill Pay platform 10.

Thereafter, the Bill Pay platform 10 performs a lookup or a search in the Payer Alias Directory 50 in order to retrieve corresponding identification data associated with the transmitted proxy data. When retrieving said identification data of the second Payer B, the Bill Pay Platform 10 validates the proxy data of the second Payer B.

As the identification data of the second Payer B has been obtained, the Bill Pay platform 10 acknowledges the request for forwarding the RFP to the Payer Institution 30 by sending an acknowledgement message. Then, the Payer Institution 30 sends a confirmation message to the first Payer A to indicate that the request for forwarding the RFP to the second Payer B is being processed.

The Bill Pay platform 10 forwards the RFP, along with the details of the requested amount to be paid by the second Payer B, to the Payer Institution 40 of the second Payer B. The Payer Institution 40 then presents the RFP comprising an associated bill to the second Payer B, as explained above with reference to Figure 2.

The second Payer B accepts the RFP and confirms their intention to pay the specified amount of the bill by sending a validation message to the Payer Institution 40 of said second Payer B.

The Payer Institution 40 of the second Payer B then sends a payment confirmation message to the Bill Pay platform 10. This payment confirmation message includes a settlement identification data of the second Payer B. The Bill Pay platform 10 forwards the payment confirmation message, including the settlement identification data of the second Payer B, to the Biller service provider 25. The Biller service provider 25 then generates a Bill Reference Number (BRN) associated with the second Payer B and send said BRN to the Bill Pay platform 10.

The Bill Pay platform 10 forwards the BRN, associated with the Payer B, to the Payer Institution 40 of the second Payer B. The Payer Institution 40 then forwards the BRN to the second Payer B for display.

The Bill Pay platform 10 also sends a payment confirmation message to the Payer Institution 30 of first Payer A to indicate that the payment of the second Payer B has been carried out. The Payer Institution 30 of the first Payer A forwards this payment confirmation message to the first Payer A, who can note that the payment of the amount allocated to the second Payer B has now been completed.

### Example 2

In the present second example, the first Payer A splits the bill with the second Payer B.

In a second example, the first Payer A, being a customer or payer of a Bill Pay platform 10, receives through the Bill Pay platform 10 a request for payment (RFP) comprising or associated with a bill. The method of the present disclosure allows the first Payer A to forward said RFP for partial payment of the bill to the second Payer B who is another customer or payer of the Bill Pay platform 10, according to the system 100 of the present disclosure.

In the present second example, it is assumed that the RFP can be sent to anyone identified in the system 100 of the present disclosure. However, where a customer has set up to an autopay option, the customer does not have the option to forward the RFP since the bill associated with said RFP will be automatically paid on his behalf.

It is further assumed that the first Payer A can only forward the RFP to one other payer, i.e. the second Payer B does not have the option to forward the RFP to yet another payer such as Payer C, for example.

Further, it is assumed, that the second Payer B has the option either to pay his part of the bill or to reject the partial payment of the bill. Where second Payer B rejects the bill, the first Payer A is informed of the rejection. On receipt of the rejection notification, the first Payer A can amend the RFP forward request previously sent and replace the amount previously allocated to the second Payer B with an amended amount and the Bill Pay platform 10 can resend the RFP to the second Payer B. Alternatively, the first Payer A can make the payment of the total amount of the bill themself.

Further, it is assumed that both first Payer A and second Payer B have alias or proxy data registered with their respective Payer Institutions 30, 40.

A Biller 20, for instance a utility company, issues a bill for a service, said bill mentioning the first Payer A as the payer. The Biller 20 sends an RFP to the Biller service provider 25. The Biller service provider 25 forwards the RFP to the Bill Pay platform 10. The Bill Pay platform 10 forwards the RFP to the Payer Institution 30 of the first Payer A. The Payer Institution 30 of the first Payer A then presents the RFP to the first Payer A. The First Payer A receives, for example, a notification message informing him of the receipt of a bill, as explained above with reference to Figure 1.

According to the present second example, the first Payer A opts to forward the RFP for partial payment of the related bill with a payer of his choice. In the present second example, the first Payer A forwards the RFP with the second Payer B.

As a result, the Payer Institution 30 of the first Payer A receives a request from the first Payer A to forward the RFP to the second Payer B. To allow the Payer Institution 30 to process this request, the first Payer A provides the Payer Institution 30 with the proxy data of the second Payer B with their request to split the bill.

The proxy data of the second Payer B is, for instance, the mobile telephone number or the email address of the second Payer B, as associated with the Bill Pay platform 10.

The Payer Institution 30 of the first Payer A first performs a check to confirm that the bill has not previously been forwarded to the second Payer B.

Where the Payer Institution 30 of the First Payer A determines that the RFP has not previously been forwarded to the second Payer B, the Payer Institution 30 forwards the request to forward the RFP and the proxy data of the second Payer B to the Bill Pay platform 10.

Thereafter, the Bill Pay platform 10 performs a lookup or a search in the Payer Alias Directory 50 in order to retrieve identification data associated with the transmitted proxy data. When retrieving said identification data of the second Payer B, the Bill Pay Platform 10 validates the proxy data of the second Payer B.

As the identification data of the second Payer B has been obtained, the Bill Pay platform 10 acknowledges the request for forwarding the RFP to the Payer Institution 30 by sending an acknowledgement message. Then, the Payer Institution 30 send a confirmation message to the first Payer A to indicate that the request for forwarding the RFP to the second Payer B is being processed.

The Bill Pay platform 10 forwards the RFP, along with the details of the requested amount, to the Payer Institution 40 of the second Payer B. The Payer Institution 40 then presents the RFP to the second Payer B, as explained above with reference to Figure 2.

The first Payer A, who is informed that the request to forward the RFP is in progress, accepts the RFP and sends a validation message to the Payment Institution 30 to confirm their intention to pay their part of the bill associated with the RFP and to allow the Payer Institution 30 to proceed with or carry out the payment of the bill.

The Payer Institution 30 of the first Payer A sends a payment confirmation message to the Bill Pay platform 10. This payment confirmation message includes a settlement identification data of the first Payer A. The Bill Pay platform 10 forwards the payment confirmation message including the settlement identification data of first Payer A, to the Biller service provider 25. The Biller service provider 25 generates a Bill Reference Number (BRN) associated with the first Payer A and referring to the amount paid by the first Payer A regarding the outstanding bill and sends said BRN to the Bill Pay platform 10.

The Bill Pay platform 10 forwards the BRN associated with the first Payer A to the payer Institution 30 of first Payer A. The Payer Institution 30 then forwards said BRN to the first Payer A, for display.

The second Payer B then accepts the RFP and confirms their intention to pay their part of the bill to the Payer Institution 40 of second Payer B.

The Payer Institution 40 of second Payer B sends a payment confirmation message to the Bill Pay platform 10. This payment confirmation message includes a settlement identification data of the second Payer B. The Bill Pay platform 10 forwards the payment confirmation message including the settlement identification data of the second Payer B, to the Biller service provider 25. The Biller service provider 25 generates a Bill Reference Number (BRN) associated with the second Payer B and referring to the amount paid by the second Payer B regarding the outstanding bill and sends said BRN to the Bill Pay platform 10.

The Bill Pay platform 10 forwards the BRN associated with the second Payer B to the Payer Institution 40 of said second Payer B. The Payer Institution 40 then forwards the BRN to second Payer B for display.

The Bill Pay platform 10 also sends a payment confirmation message to the Payer Institution 30 of the first Payer A to confirm that the payment of the second Payer B has been carried out. The Payer Institution 30 of the first Payer A forwards the payment confirmation message to the first Payer A, who can note that the payment regarding the amount allocated to the second Payer B has now been completed.

## Claims

1. A method for processing a request for payment (RFP) among one or more payers,
wherein the RFP is associated with an outstanding bill, said RFP being issued by a Biller (20), said method comprising:
sending (120), by a Biller (20) or a Biller service provider (25), the RFP to a Bill Pay platform (10);
forwarding (130), by the Bill Pay platform (10), the RFP to a first Payer (A); receiving (140), by the first Payer (A), the RFP;
sending (150), by the first Payer (A), a request to the Bill Pay Platform (10) to forward the RFP to a second Payer (B) for full or partial payment;
receiving (160), by the Bill Pay platform (10), the first request to forward the RFP to the second Payer (B); and
forwarding (170), by the Bill Pay platform (10), the RFP to the second Payer (B).

2. The method of claim 1, wherein the step of forwarding (130), by the Bill Pay platform (10), the RFP to the first Payer (A) comprises:
forwarding, by the Bill Pay platform (10), the RFP to a first Payer Institution (30) associated with the first Payer (A);
receiving, by the first Payer Institution (30), the RFP; and
forwarding, by the first Payer Institution (30), the RFP to the first Payer (A).

3. The method of claim 1 or 2, wherein the step of forwarding (170), by the Bill Pay platform (10) the RFP to the second Payer (B), comprises:
forwarding, by the Bill Pay platform (10), the RFP to a second Payer Institution (40) associated with the second Payer (B);
receiving, by the second Payer Institution (40), the RFP; and
forwarding, by the second Payer Institution (40), the RFP to the second Payer (B).

4. The method of any preceding claim, wherein the step of sending, by the first Payer (A), a request to the Bill Pay Platform (10) to forward the RFP to a second Payer (B) comprises:
sending, by the first Payer (A), a request to the first Payer Institution (30) to forward the RFP to the second Payer (B);
receiving, by the first Payer Institution (30), the request to forward the RFP; and
forwarding, by the first Payer Institution (30), the request to the Bill Pay platform (10) to forward the RFP.

5. The method of claim 4, wherein the method further comprises, after receipt by the first Payer Institution (30), of the request to forward the RFP:
checking, by the first Payer Institution (30), whether the RFP has previously been forwarded, and, where the RFP has not previously been forwarded:
sending, by the first Payer Institution (30), the request to the Bill Pay platform (10) to forward the RFP.

6. The method of any preceding claim, wherein the step of sending (150), by the first Payer (A), a request to forward the RFP to a second Payer (B) comprises:
sending, by the first Payer (A), together with the request to forward the RFP, proxy data of the second Payer (B).

7. The method of claim 6, wherein the method further comprises:
receiving, by the Bill Pay platform (10), the request to forward the RFP together with the proxy data of the second Payer (B);
using the proxy data of the second Payer (B) to retrieve corresponding identification data of the second Payer (B) in a Payer Alias Directory (50), and
forwarding, by the Bill Pay platform (10) the RFP to the second Payer (B) using the retrieved identification data of the second Payer (B).

8. The method of any preceding claim, further comprising:
sending, by the second Payer (B), to a second Payer Institution (40) associated with the second Payer (B), a validation message regarding the intention of the second Payer (B) to pay the RFP;
receiving, by the second Payer Institution (40), the validation message; and
forwarding, by the second Payer Institution (40) the validation message to the Bill Pay platform (10).

9. The method of claim 8, further comprising:
carrying out, by the second Payer Institution (40), the payment of the outstanding bill associated with the RFP;
sending, by the second Payer Institution (40), a payment confirmation message regarding the completed payment of the outstanding bill by the second Payer (B);
receiving, by the Bill Pay platform (10), the payment confirmation message; and
sending, by the Bill Pay platform (10), the payment confirmation message to the first Payer (A).

10. The method of claim 8 or 9, further comprising:
forwarding, by the Bill Pay platform (10), the payment confirmation message to the Biller service provider (25).

11. The method of claim 10, further comprising:
receiving, by the Biller service provider (25), the payment confirmation message;
generating, by the Biller service provider (25), a Bill Reference Number (BRN) relating to the payment of the outstanding bill by the second Payer (B); and
forwarding, by the Biller service provider (25), the BRN to the Bill Payment platform (10).

12. The method of any preceding claim, wherein the step of receiving, by the first Payer (A), the RFP, comprises:
receiving, by the first Payer (A), an RFP in a banking application installed on a personal electronic device used by the first Payer (A).

13. A data processing system comprising a processor configured to perform the method of any of claims 1 to 12.

14. A computer program product comprising instructions which, when the program is executed by a computer, cause the computer to carry out the method of any of claims 1 to 12.

15. A computer-readable storage medium comprising instructions which, when executed by a computer, cause the computer to carry out the method of any of claims 1 to 12.
